# DEMANDE DE BREVET EUROPEEN

(11) **EP 2 489 954 A2**
(43) Date de publication de la demande: **22.08.2012**
(21) Numéro de dépôt: 12154362.3
(22) Date de dépôt: 08.02.2012
(51) Int. Cl.: F24H 1/20, F24H 9/20, F24H 9/12

(54) **Procédé et dispositif de gestion de réserve d'eau chauffée**

(30) Priorité: 21.02.2011 FR 1151397
(71) Demandeur: Atlantic Industrie, 85000 La Roche sur Yon (FR)
(72) Inventeur: Merlet, Christian, 85140 Les Essarts (FR)
(74) Mandataire: Kaspar, Jean-Georges

(57) **Abrégé**

Un procédé de gestion d'une réserve d'eau chauffée à une température prédéterminée, comporte les étapes suivantes :
a) détecter (100) si la réserve d'eau chaude stockée est au moins partiellement épuisée ;
b) compléter (104) la réserve d'eau chaude stockée au moins partiellement épuisée avec de l'eau chauffée par un moyen chauffant.

L'eau chauffée ou le complément d'eau chauffée est stocké (105) en partie haute dans le chauffe-eau, en évitant que les mouvements de l'eau chauffée montant vers le haut « cassent » le « miroir » et brassent l'ensemble de l'eau contenue dans la cuve du chauffe-eau.
Application aux dispositifs de gestion d'une réserve d'eau chauffée à une température prédéterminée.

## Description

L'invention est relative à un procédé de gestion d'une réserve d'eau chauffée à une température prédéterminée.

L'invention est également relative à un dispositif de gestion d'une réserve d'eau chauffée à une température prédéterminée.

L'invention est particulièrement utile pour les utilisateurs des accumulateurs d'eau chaude, notamment des utilisateurs de chauffe-eau électrique, thermique, thermodynamique ou de chauffe-eau solaire à accumulation.

Les chauffe-eau électriques comportent une cuve constituant une réserve d'eau chauffée et un élément chauffant, placé à l'intérieur de cette cuve. L'entrée d'eau froide est située dans la partie inférieure de chauffe-eau. La sortie d'eau chauffée est située dans la partie supérieure du chauffe-eau.

Lorsque la réserve d'eau chauffée stockée dans un chauffe-eau électrique est épuisée, il faut attendre le réchauffage de l'eau pendant un temps important, avant de pouvoir à nouveau utiliser de l'eau chaude.

Entre deux périodes de chauffage de l'eau, l'eau chauffée est située au dessus de l'eau froide. La zone de séparation entre l'eau chaude et l'eau froide présente une faible hauteur et est appelée « miroir » par les hommes du métier.

Au fur et à mesure de la consommation d'eau chaude, le « miroir » monte progressivement à mesure que le volume d'eau chaude diminue et que le volume d'eau froide augmente. Dans les chauffe-eau électriques actuels de type connu, l'élément chauffant est placé en partie inférieure, de manière à chauffer l'eau dans cette zone inférieure.

Les mouvements de convection de l'eau chauffée qui monte vers le haut « cassent » le « miroir » et brassent l'ensemble de l'eau contenue dans la cuve.

La température de l'eau ainsi brassée devient relativement homogène. Au cours du chauffage, cette température monte progressivement jusqu'à atteindre la température de consigne, généralement voisine de 65°C. L'alimentation électrique de l'élément chauffant est ensuite coupée automatiquement.

Dans ce mode de fonctionnement, lorsque la réserve d'eau chaude stockée est épuisée, il faut attendre le réchauffage de l'eau pendant un temps important, avant de pouvoir à nouveau utiliser de l'eau chaude.

Cet inconvénient est particulièrement gênant pour les chauffe-eau, dont l'eau est chauffée pendant la nuit pour bénéficier d'une tarification inférieure dite « heures creuses ». En effet, si la réserve d'eau chaude stockée est épuisée en cours de journée, il faut chauffer une grande quantité d'eau à une tarification supérieure dite « heures pleines », pour reconstituer la réserve même si la quantité d'eau chaude à consommer pendant le reste de la journée est faible.

Le document US 7.257.320 décrit un procédé et un dispositif permettant la commande d'un chauffe-eau électrique en utilisant deux éléments chauffants.

Le document US 4.598.694 décrit un procédé et une partition de chauffe-eau, comportant une plaque de forme conique avec un trou central pour laisser passer l'eau chaude et des découpes en périphérie pour laisser passer l'eau froide.

Un premier but de l'invention est de fournir à un utilisateur un nouveau procédé de gestion d'une réserve d'eau chauffée à une température prédéterminée, en remédiant aux inconvénients de l'art antérieur.

Un deuxième but de l'invention est de fournir à l'utilisateur un nouveau dispositif de gestion d'une réserve d'eau chauffée à une température prédéterminée, en remédiant aux inconvénients de l'art antérieur.

L'invention a pour objet un procédé de gestion d'une réserve d'eau chauffée à une température prédéterminée, dans lequel l'eau contenue dans un chauffe-eau est chauffée à une température de consigne choisie, comportant les étapes suivantes :
a) détecter si la réserve d'eau chaude stockée est au moins partiellement épuisée ;
b) compléter la réserve d'eau chaude stockée au moins partiellement épuisée avec de l'eau chauffée par un moyen chauffant ;
caractérisé par le fait que l'eau chauffée ou le complément d'eau chauffée par un moyen chauffant est canalisé par un moyen de transfert vers une partie haute dans le chauffe-eau et stocké en partie haute dans le chauffe-eau en évitant que les mouvements de l'eau chauffée montant vers le haut « cassent » le « miroir » et brassent l'ensemble de l'eau contenue dans la cuve du chauffe-eau.

Selon d'autres caractéristiques alternatives de l'invention :
- l'eau chauffée ou le complément d'eau chauffée est chauffée par un moyen chauffant placé en partie haute dans le chauffe-eau
- l'eau chauffée ou le complément d'eau chauffée peut être chauffé par un moyen chauffant placé en partie basse dans le chauffe-eau

L'invention a également pour objet un dispositif de gestion d'une réserve d'eau chauffée à une température prédéterminée, comportant un moyen chauffant, pour compléter une réserve d'eau chaude stockée au moins partiellement épuisée avec de l'eau chauffée par le moyen chauffant si la réserve d'eau chaude stockée est au moins partiellement épuisée, caractérisé par le fait que le dispositif comporte un moyen de transfert de l'eau chauffée ou du complément d'eau chauffée vers une partie haute dans un chauffe-eau et de stockage de l'eau chauffée ou du complément d'eau chauffée en partie haute dans le chauffe-eau, en évitant que les mouvements de l'eau chauffée montant vers le haut « cassent » le « miroir » et brassent l'ensemble de l'eau contenue dans la cuve du chauffe-eau.

Selon d'autres caractéristiques alternatives de l'invention :
- le dispositif comporte un moyen de transfert par thermosiphon de l'eau chauffée ou du complément d'eau chauffée vers une partie haute dans le chauffe-eau.
- le dispositif comporte un moyen de canalisation de l'eau chauffée ou du complément d'eau chauffée vers une partie haute dans le chauffe-eau.
- le moyen de canalisation de l'eau chauffée ou du complément d'eau chauffée vers une partie haute dans le chauffe-eau est conformé en cheminée de circulation.
- le moyen chauffant est placé en partie basse dans le chauffe-eau

L'invention sera mieux comprise grâce à la description qui va suivre donnée à titre d'exemple non limitatif en référence aux dessins annexés dans lesquels :
La figure 1 représente schématiquement un organigramme d'un procédé de gestion selon l'invention ;
La figure 2 représente schématiquement un premier chauffe-eau à accumulation équipé d'un dispositif selon l'invention;

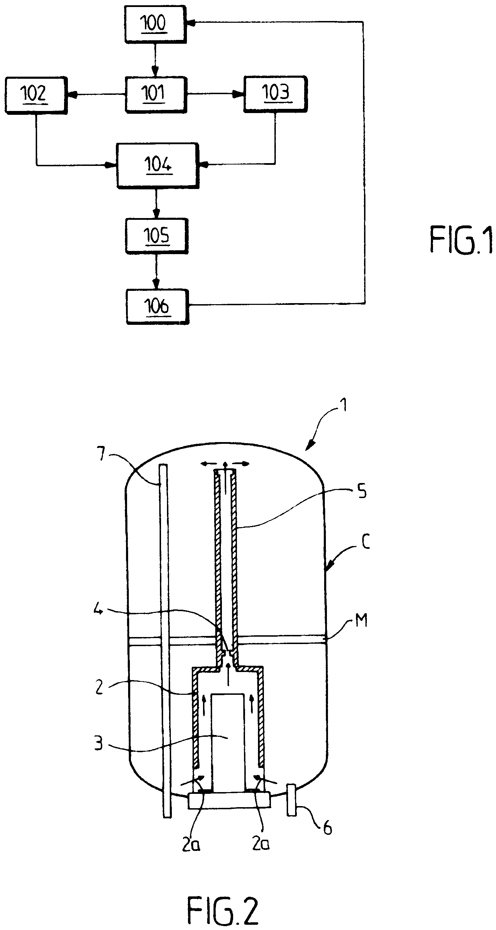

En référence aux figures 1 et 2, les éléments identiques ou fonctionnellement équivalents sont repérés par des chiffres de référence identiques.

Sur la figure 1, un procédé de gestion d'une réserve d'eau chauffée à une température prédéterminée débute par une étape 100 pour détecter si la réserve d'eau chaude stockée est au moins partiellement épuisée.

A l'étape 101, si la réserve d'eau chaude stockée est au moins partiellement épuisée, on teste l'alimentation en énergie pour connaître le régime de tarification et déterminer si le régime de tarification est une tarification inférieure dite « heures creuses » ou une tarification supérieure dite « heures pleines ».

A l'étape 102, si le régime de tarification est une tarification inférieure dite « heures creuses », on chauffe rapidement l'eau qui va être utilisée pour que la réserve d'eau chaude devienne suffisante.

A l'étape 103, si le régime de tarification est une tarification supérieure dite « heures pleines », et si le manque d'eau chaude se produit pendant cette période peu favorable pour le chauffage de l'eau, on prévoit de chauffer une quantité d'eau peu supérieure à la quantité d'eau chauffée qui va être consommée.

A cet effet, l'utilisateur précise le besoin d'eau chauffée en indiquant, soit de relancer la chauffe pour chauffer l'eau pour une douche, soit de relancer la chauffe pour chauffer l'eau pour un bain, soit de relancer la chauffe pour chauffer une quantité d'eau donnée, soit de relancer la chauffe pour chauffer pendant un temps donné, soit de décaler le démarrage de la chauffe suivant la quantité d'eau chaude restante et la température de l'eau froide, soit d'effectuer une adaptation de la quantité d'eau chaude à chauffer suivant un apprentissage des semaines précédentes.

A l'étape 104, on complète la réserve d'eau chaude stockée au moins partiellement épuisée avec de l'eau chauffée par un moyen chauffant.

A l'étape 105, l'eau chauffée ou le complément d'eau chauffée est stocké en partie haute dans le chauffe-eau en évitant que les mouvements de l'eau chauffée montant vers le haut « cassent » le « miroir » et brassent l'ensemble de l'eau contenue dans la cuve du chauffe-eau.

Avantageusement, l'eau chauffée ou le complément d'eau chauffée est canalisé par un moyen de transfert vers une partie haute dans le chauffe-eau.

L'eau chauffée ou le complément d'eau chauffée est généralement chauffé par un moyen chauffant placé en partie basse dans le chauffe-eau, ou, alternativement, l'eau chauffée ou le complément d'eau chauffée peut être chauffé par un moyen chauffant placé en partie haute dans le chauffe-eau.

L'invention permet d'éliminer l'essentiel des mouvements de convection pendant les périodes de chauffage et de chauffer uniquement l'eau dans la partie supérieure de la cuve C.

A l'étape 106, on réinitialise le procédé à l'étape 100 pour informer l'utilisateur de la réserve restante de la cuve du chauffe-eau.

Sur la figure 2, un premier chauffe-eau à accumulation équipé d'un dispositif selon l'invention constitue un équipement 1 de stockage de chaleur comportant une cuve C, une chambre thermique isolée 2, un élément chauffant 3, un passage 4 de restriction et un tube 5 de transfert isolé.

Le chauffe-eau comporte de manière connue la cuve C constituant une réserve d'eau chauffée et l'élément chauffant 3 placé à l'intérieur de cette cuve C. L'entrée 6 d'eau froide est située dans la partie inférieure de chauffe-eau. La sortie 7 d'eau chauffée est située dans la partie supérieure du chauffe-eau.

Entre deux périodes de chauffage de l'eau, l'eau chauffée est située au dessus de l'eau froide. La zone supérieure est remplie d'eau chaude dont la température est généralement proche de la valeur de consigne choisie sur un thermostat.

La zone de séparation entre l'eau chaude et l'eau froide présente une faible hauteur et est appelée « miroir » par les hommes du métier.

Le miroir M est un volume d'eau situé entre l'eau froide en partie inférieure et l'eau chaude en partie supérieure. Le miroir M se déplace en montant vers le haut lors de soutirages répétés d'eau chaude.

Selon l'invention, l'eau chauffée par l'élément chauffant 3 est diffusée dans une zone située dans la partie supérieure de la cuve C d'eau chaude, en évitant que les mouvements de l'eau chauffée montant vers le haut « cassent » le « miroir » et brassent l'ensemble de l'eau contenue dans la cuve du chauffe-eau.

L'élément chauffant 3 est situé dans la partie inférieure de la cuve C d'eau chaude, dans une enveloppe 2 formant chambre thermique.

L'enveloppe 2 est composée d'une chambre thermique 2 sensiblement verticale, qui enveloppe l'élément chauffant 3.

La chambre thermique 2 est prolongée dans sa partie supérieure par un tube de transfert 5 qui débouche dans la partie supérieure de la cuve C d'eau chaude.

Le tube de transfert 5 comporte avantageusement une restriction 4 qui limite le débit d'écoulement de l'eau chauffée. Cette restriction 4 peut fonctionner en mitigeur.

La chambre thermique 2 et le tube de transfert 5 sont de préférence thermiquement isolés.

La chambre thermique 2 présente dans sa partie inférieure des passages 2a d'admission pour laisser entrer l'eau froide environnante arrivant par l'entrée 6 d'eau froide débouchant dans la partie inférieure de chauffe-eau.

L'eau froide arrivant par l'entrée 6 d'eau froide entre dans la chambre thermique 2 par les passages 2a d'admission pour y être chauffée par l'élément chauffant 3 situé dans la partie inférieure de la cuve C d'eau chaude.

La circulation naturelle par thermosiphon de l'eau chauffée par l'élément chauffant 3 à travers le tube de transfert 5 est provoquée par la différence de densité entre l'eau chauffée par l'élément chauffant 3 qui devient plus légère et l'eau froide environnante arrivant par l'entrée 6 d'eau froide débouchant dans la partie inférieure de chauffe-eau 1.

Cette circulation naturelle par thermosiphon ne demande pas d'apport d'énergie complémentaire.

L'eau chauffée par l'élément chauffant 3 et passant à travers le tube de transfert 5 débouche dans la partie supérieure de la cuve C d'eau chaude et y reste stockée à disposition immédiate de l'utilisateur.

L'invention décrite en référence à un mode de réalisation particulier ne lui est nullement limitée, mais couvre au contraire toutes modifications de forme et toutes variantes de réalisation dans le cadre et l'esprit des revendications annexées.

## Revendications

1. Procédé de gestion d'une réserve d'eau chauffée à une température prédéterminée, dans lequel l'eau contenue dans un chauffe-eau (1) est chauffée à une température de consigne choisie, comportant les étapes suivantes :
a) détecter (100) si la réserve d'eau chaude stockée est au moins partiellement épuisée ;
b) compléter (104) la réserve d'eau chaude stockée au moins partiellement épuisée avec de l'eau chauffée par un moyen chauffant (3);
**caractérisé par le fait que** l'eau chauffée ou le complément d'eau chauffée par un moyen chauffant (3) est canalisé par un moyen de transfert vers une partie haute dans le chauffe-eau et stocké (105) en partie haute dans le chauffe-eau (1), en évitant que les mouvements de l'eau chauffée montant vers le haut « cassent » le « miroir » (M) et brassent l'ensemble de l'eau contenue dans la cuve (C) du chauffe-eau (1).

2. Procédé selon la revendication 1, **caractérisé par le fait que** l'eau chauffée ou le complément d'eau chauffée est canalisé par un moyen de transfert (5) par thermosiphon vers une partie haute dans le chauffe-eau (1).

3. Procédé selon la revendication 1 ou 2, **caractérisé par le fait que** l'eau chauffée ou le complément d'eau chauffée est chauffé par un moyen chauffant (3) placé en partie basse dans le chauffe-eau (1).

4. Dispositif de gestion d'une réserve d'eau chauffée à une température prédéterminée, comportant un moyen chauffant (3) pour compléter une réserve d'eau chaude stockée au moins partiellement épuisée avec de l'eau chauffée par le moyen chauffant (3) si la réserve d'eau chaude stockée est au moins partiellement épuisée, **caractérisé par le fait que** le dispositif comporte un moyen de transfert (5) de l'eau chauffée ou du complément d'eau chauffée vers une partie haute dans un chauffe-eau (1) et de stockage de l'eau chauffée ou du complément d'eau chauffée en partie haute dans le chauffe-eau (1), en évitant que les mouvements de l'eau chauffée montant vers le haut « cassent » le « miroir » et brassent l'ensemble de l'eau contenue dans la cuve du chauffe-eau.

5. Dispositif selon la revendication 4, **caractérisé par le fait que** le dispositif comporte un moyen de transfert (5) par thermosiphon de l'eau chauffée ou du complément d'eau chauffée vers une partie haute dans le chauffe-eau (1).

6. Dispositif selon la revendication 4 ou 5, **caractérisé par le fait que** le dispositif comporte un moyen (4,5) de canalisation de l'eau chauffée ou du complément d'eau chauffée vers une partie haute dans le chauffe-eau (1).

7. Dispositif selon l'une quelconque des revendications 4 à 6, **caractérisé par le fait que** le moyen (4,5) de canalisation de l'eau chauffée ou du complément d'eau chauffée vers une partie haute dans le chauffe-eau (1) est conformé en cheminée de circulation.

8. Dispositif selon l'une quelconque des revendications 4 à 7, **caractérisé par le fait que** le moyen chauffant (3) est placé en partie basse dans le chauffe-eau (1).
